# EUROPÄISCHE PATENTSCHRIFT

(11) **EP 0 770 003 B1**
(45) Veröffentlichungstag und Bekanntmachung des Hinweises auf die Patenterteilung: **31.03.1999**
(21) Anmeldenummer: 95925820.3
(22) Anmeldetag: 04.07.1995
(51) Int. Cl.: B32B 15/08, B32B 27/08, B05D 7/04, C08J 7/04

(54) **VERFAHREN ZUR HERSTELLUNG VON MIT MEHREREN SCHICHTEN BESCHICHTETEN SUBSTRATEN**
PROCESS FOR PRODUCING SUBSTRATES PROVIDED WITH SEVERAL COATINGS
PROCEDE DE FABRICATION DES SUBSTRATS RECOUVERTS DE PLUSIEURS COUCHES

(30) Priorität: 09.07.1994 DE 4424299
(43) Veröffentlichungstag der Anmeldung: 02.05.1997
(73) Patentinhaber: BASF Coatings Aktiengesellschaft, 48165 Münster (DE)
(72) Erfinder: WEGNER, Egon, D-48143 Münster (DE); KIRIAZIS, Leonidas, D-48151 Münster (DE)
(74) Vertreter: Fitzner, Uwe, Dr.
(86) Internationale Anmeldenummer: EP9502582
(87) Internationale Veröffentlichungsnummer: WO9601737

(56) Entgegenhaltungen:
- EP-A- 0 203 399
- EP-A- 0 291 927
- WO-A-89/06598
- WO-A-94/19113
- DE-A- 3 326 392
- DE-A- 4 006 809
- US-A- 5 268 215

## Beschreibung

In der EP-A-374 551 werden beschichtete Substrate offenbart, die zur Herstellung von Anbauteilen für Automobilkarosserien geeignet sind. Die in der EP-A-374 551 beschriebenen beschichteten Substrate bestehen aus Metallblechen, die mit mindestens einer Lackschicht lackiert sind oder aus Verbundwerkstoffen, deren Oberflächenschicht aus den lackierten Metallblechen besteht.

Der vorliegenden Erfindung lag die Aufgabe zugrunde, mit mehreren Schichten beschichtete Substrate bereitzustellen, die gegenüber den in der EP-A-374 551 offenbarten beschichteten Substraten verbesserte Eigenschaften aufweisen und bei deren Herstellung nur geringe Menge an Lösemitteln emitiert werden und eine einfache Qualitätsüberwachung möglich ist.

Die se Aufgabe wird gelöst durch ein Verfahren zur Herstellung von mit mehreren Schichten beschichteten Substraten, dei dem
A auf die Oberfläche eines nicht lackierten Substrates eine Kunststoffolie mit einer Dicke von 2 bis 500 µm laminiert wird,
B die Oberfläche der auflaminierten Kunststoffolie gegebenenfalls mit einer zur Lackierung von Automobilkarosserien geeigneten Füllerzusammensetzung lackiert wird,
C die Oberfläche der auflaminierten Kunststoffolie bzw. die nach Durchführung der Stufe B erhaltene Füllerschicht mit mindestens einer pigmentierten Lackschicht überlackiert wird,
D die nach Durchführung der Stufe C erhaltene Lackschicht gegebenenfalls mit einem transparenten Lack überlackiert wird und
E die auf die Oberfläche der auflaminierten Kunststoffolie aufgetragene Lackschicht bzw. die auf die Oberfläche der auflaminierten Kunststoffolie aufgetragenen Lackschichten ausgehärtet werden, wobei die Aushärtung der in Stufe B aufgetragenen Füllerschicht vor dem überlackieren mit mindestens einer pigmentierten Lackschicht und die Aushärtung der in Stufe C aufgetragenen pigmentierte Lackschicht vor dem Überlackieren mit dem transparenten Lack durchgeführt werden kann.

Gegenstand der vorliegenden Erfindung ist auch die Verwendung des erfindungsgemäßen Verfahrens zur Herstellung von Fahrzeugkarosserien, vorzugsweise Automobilkarosserien sowie zur Herstellung von Anbauteilen für Fahrzeugkarosserien.

Die erfindungsgemäß beschichteten Substrate zeichnen sich durch eine sehr hohe Resistenz gegenüber Steinschlag und Korrosion aus. Weitere Vorteile der erfindungsgemäß beschichteten Substrate bestehen darin, daß sie auf Anlagen mit einem geringen Raumbedarf herstellbar sind, daß bei der Herstellung der erfindungsgemäß beschichteten Substrate durch den Einsatz einer Kunststoffolie in Stufe A nur sehr geringe Mengen an organischen Lösemitteln emitiert werden und daß die Qualitätsüberwachung schon bei der in Stufe A eingesetzten Kunststoffolie einsetzen kann, wohingegen beim Einsatz von Lacken die Qualität der Beschichtung erst nach Aushärten der Lackschicht beurteilt werden kann und im Falle von Qualitätsmängeln das lackierte Substrat als Ganzes verworfen werden muß.

In Stufe A des Verfahrens zur Herstellung der erfindungsgemäß beschichteten Substrate können im Prinzip alle Substrate, die zur Herstellung von Fahrzeugkarosserien sowie zur Herstellung von Anbauteilen für Fahrzeugkarosserien geeignet sind, eingesetzt werden. Als Beispiele werden ggf. vorbehandelte Metallbleche, wie z.B. ggf. vorbehandelte Stahl- und Aluminiumbleche sowie Formteile aus Kunststoff genannt. Vorzugsweise werden Formteile aus Kunststoff und ganz besonders bevorzugt ggf. vorbehandelte Metallbleche, insbesondere ggf. vorbehandelte Stahlbleche als Substrate eingesetzt. Die Metallbleche können beispielsweise durch Phosphatierung und/oder Chromatierung vorbehandelt sein.

In Stufe A kann eine Folie aus einem Polyolefin, einem Polyamid, einem Polyurethan, einem Polyester, einem Polyacrylat, einem Polycarbonat oder einer Mischung aus unterschiedlichen polymeren Stoffen eingesetzt werden. Die in Stufe A eingesetzte Kunststoffolie weist eine Dicke von 2-500 vorzugsweise 20-250 µm auf und kann Farbstoffe und/oder Pigmente enthalten. Die Haftung zum Substrat kann auf unterschiedliche Weise bewerkstelligt werden. Eine Möglichkeit besteht beispielsweise darin, daß Folien, die haftungsvermittelnde Gruppen, wie z.B. Urethangruppen, Säureanhydridgruppen oder Carboxylgruppen aufweisen oder Folien, die durch Coextrusion mit einem haftungsvermittelnde Gruppen aufweisenden Polymer mit haftungsvermittelnden Gruppen versehen worden sind, eingesetzt werden. Die Haftung zwischen der Folie und dem Substrat kann auch durch Verwendung eines Klebstoffes erreicht werden. Hierbei können sowohl bei Raumtemperatur feste als auch bei Raumtemperatur flüssige Klebstoffe zum Einsatz kommen.

Das Auflaminieren der Kunststoffolie kann nach allgemein gut bekannten Verfahren erfolgen. Beim Auflaminieren von Folien mit haftungsvermittelnden Gruppen wird im allgemeinen das Substrat mit der Folie derart bedeckt, daß die Haftvermittlerschicht die Substratoberfläche berührt. Durch Anwendung von Druck und Wärme wird sodann mit Hilfe von temperierbaren Pressen oder im Walzenspalt eines Walzwerkes oder Kalanders mit Hilfe temperierbarer Walzen die Folie auf das Substrat auflaminiert. Druck und Temperatur sind dabei so zu wählen, daß eine feste Verbindung zwischen dem Substrat und der Folie entsteht. Bei Verwendung von bei Raumtemperatur festen Klebstoffen wird ähnlich vorgegangen. Wenn flüssige Klebstoffe zur Anwendung kommen, wird im allgemeinen so vorgegangen, daß der flüssige Klebstoff auf das Substrat appliziert wird und die Kunststoffolie auf das erhitzte, mit dem Klebstoff beschichtete Substrat auflaminiert wird.

In Stufe B kann die auflaminierte Kunststoffolie mit einer zur Lackierung von Automobilkarosserien geeigneten Füllerzusammensetzung lackiert werden. Bei der konventionellen Lackierung von Automobilkarosserien wird die mittels Elektrotauchlackierung aufgebrachte Grundierung mit einer Füllerzusammensetzung überlackiert. Die auf diese Weise erhaltene Füllerschicht hat im wesentlichen zwei Aufgaben: Zum einen soll sie die Unebenheiten der Elektrotauchgrundierung ausgleichen und zum anderen die Steinschlagbeständigkeit der Gesamtlackierung verbessern. Füllerzusammensetzungen zur Herstellung von Füllerschichten bei der Automobilkarosserielackierung sind in großer Vielzahl bekannt und brauchen daher hier im Detail nicht weiter beschrieben zu werden. Füllerzusammensetzungen bestehen im wesentlichen aus einem Bindemittel, einem Vernetzungsmittel, Pigmenten und Füllstoffen sowie ggf. weiteren Additiven, wie z.B. Vernetzungskatalysatoren und Verlaufshilfsmittel. Die einsetzbaren Füllerzusammensetzungen können als Bindemittel beispielsweise Epoxidharze, Polyesterharze, Polyurethanharze, Polyacrylatharze und Alkydharze oder Kombinationen aus solchen Harzen enthalten. Als Vernetzungsmittel können die einsetzbaren Füllerzusammensetzungen Aminoplastharze, wie z.B. Melamin-Formaldehydharze, Amine, Polyisocyanate und Carboxylgruppen enthaltende Verbindungen enthalten. Als Beispiele für Pigmente, die in den einsetzbaren Füllerzusammensetzungen enthalten sein können, werden Titandioxid, Phtalocyanine, Eisenoxide und Ruß genannt. Als Füllstoffe können die Füllerzusammensetzungen beispielsweise Kalk oder Bariumsulfat enthalten.

Die erfindungsgemäß beschichteten Substrate weisen überraschenderweise auch dann eine gute Resistenz gegenüber Steinschlag auf, wenn in Stufe B keine Füllerzusammensetzung aufgebracht wird.

Auf die Oberfläche der auflaminierten Kunststoffolie bzw. auf die nach Durchführung der Stufe B erhaltene Füllerschicht wird entweder mindestens eine pigmentierte Decklackschicht oder eine sogenannte Basecoat-Clearcoat-Lackierung, die aus einer pigmentierten Basislackschicht und einer überlackierten transparenten Lackschicht besteht, aufgebracht.

In Stufe C kann jeder für die konventionelle Lackierung von Automobilkarosserien geeignete Decklack bzw. Basislack verwendet werden. Derartige Lacke sind dem Fachmann gut bekannt und in großer Vielzahl im Handel erhältlich. Sie enthalten im wesentlichen ein polymeres Bindemittel, ggf. ein Vernetzungsmittel sowie ein Pigment oder eine Mischung aus Pigmenten. Der in Stufe C eingesetzte Decklack bzw. Basislack kann als Bindemittel beispielsweise ein Polyesterharz, ein Polyurethanharz oder ein Polyacrylatharz oder eine Mischung aus solchen Bindemitteln enthalten. Als Vernetzungsmittel kann der Decklack bzw. Basislack ein Aminoplastharz, ein Polyisocyanatharz, ein Carboxylgruppen enthaltendes Vernetzungsmittel oder eine Mischung aus solchen Vernetzungsmitteln enthalten. Als Beispiele für Pigmente, die in der in Stufe C aufgebrachten pigmentierten Decklackschicht bzw. Basislackschicht enthalten sein können, werden Titandioxid, Phtalocyaninpigmente, Ruß, Eisenoxidpigmente, Aluminiumplättchenpigmente und Perlglanzpigmente genannt.

Wenn die erfindungsgemäß beschichteten Substrate mit einer Basecoat-Clearcoat-Lackierung versehen werden sollen, wird in Stufe E auf die in Stufe D applizierte Lackschicht eine transparente Lackschicht aufgetragen. Auch hier können alle für die konventionelle Automobillackierung einsetzbaren transparenten Lacke eingesetzt werden. Es können auch Pulverklarlacke eingesetzt werden. Auch die in Stufe E aufgetragenen transparenten Lacke bestehen aus einem Bindemittel, ggf. einem Vernetzungsmittel und weiteren üblichen Additiven. Derartige Lacke sind in großer Auswahl im Handel erhältlich und dem Fachmann gut bekannt. Sie brauchen daher an dieser Stelle nicht näher beschrieben zu werden.

In Stufe E wird die auf die Oberfläche der auflaminierten Kunststoffolie aufgetragene Lackschicht bzw. werden die auf die Oberfläche der auflaminierten Kunststoffolie aufgetragene Lackschichten ausgehärtet, wobei die Aushärtung der in Stufe B aufgetragenen Füllerschicht vor dem Überlackieren mit mindestens einer pigmentierten Lackschicht und die Aushärtung der in Stufe C aufgetragenen pigmentierten Basislackschicht vor dem Überlackieren mit dem transparenten Lack durchgeführt werden kann. Es ist auch möglich, die in Stufe B aufgetragene Füllerschicht in nicht-ausgehärtetem Zustand mit einer Basislackschicht überzulackieren und sodann vor dem Auftragen der transparenten Lackschicht Füller- und Basislackschicht gemeinsam auszuhärten. Die Aushärtung der Lackschichten erfolgt üblicherweise durch Erhitzen auf Temperaturen von 60 bis 230°C. Dabei kommt es bei Lacken, die ein Vernetzungsmittel enthalten, zu einer Reaktion zwischen den in den Lacken enthaltenen Bindemitteln und Vernetzungsmitteln, und es werden dreidimensionale polymere Netzwerke gebildet, die der Lackoberfläche eine besonders hohe Resistenz gegenüber mechanischen oder chemischen Angriffen verleihen. Bei Lacken, die keine Vernetzungsmittel enthalten, kommt es im Laufe des Aushärtungsprozesses zu einer physikalischen Trocknung der Lackfilme.

Die Applikation der Lackschichten kann durch Spritzen, Tauchen, Fluten, Walzen oder Rakeln erfolgen. Bei der Herstellung von mit mehreren Schichten beschichteten Metallblechen werden die Lackschichten vorzugsweise mit Hilfe des Bandlackierverfahrens (Coil-Coating-Verfahrens) aufgebracht.

Die erfindungsgemäß beschichteten Substrate können zur Herstellung von Anbauteilen für Fahrzeugkarosserien verwendet werden. Sie können dazu verformt werden und ggf. mit Hilfe von weiteren Materialien, wie z.B. faserverstärkten Kunststoffen zu Verbundwertstoffen weiterverarbeitet werden. Die Verformung und eventuelle Weiterverarbeitung kann sowohl nach Stufe E als auch nach Stufe A erfolgen. Es ist bevorzugt, die Verformung und eventuelle Weiterverarbeitung nach Stufe E vorzunehmen. Wenn die Verformung und eventuelle Weiterverarbeitung nach Stufe A vorgenommen wird, werden die Stufen B-E am verformten bzw. weiterverarbeiteten Halbfabrikat durchgeführt.

Die Erfindung wird in den folgenden Ausführungsbeispielen näher erläutert. Alle Angaben über Prozente und Teile sind als Gewichtsangaben zu verstehen, es sei denn, es wird ausdrücklich etwas anderes angegeben.

### Beispiel 1

Eine weißpigmentierte thermoplastische 60 µm dicke Polyurethanfolie (Elastollan® EL 1184A der Firma Elastogran GmbH) wird bei einer Temperatur von 220°C und einem Druck von 50 bar auf ein Karosserieblech (Bonder 2660 OC) kaschiert. Die Oberfläche der auflaminierten Kunststoffolie wird sodann mit einem handelsüblichen weißpigmentierten nichtwäßrigen Decklack überlackiert (Trockenfilmdicke: 45-50 µm). Die applizierte Lackschicht wird dann bei 130°C 30 Minuten lang eingebrannt.

### Beispiel 2

Eine weißpigmentierte thermoplastische 60 µm dicke Polyurethanfolie (Elastollan® EL 1184A der Firma Elastogran GmbH) mit einer 20 µm dicken Haftvermittlerschicht aus einem Polyester auf Basis von Butandiol 1,4 und Terephtalsäure/Isophtalsäure (1:1) wird bei einer Temperatur von 150°C und einem Druck von 25 bar auf ein Karosserieblech (Bonder 2660 OC) gepreßt. Die Oberfläche der auflaminierten Kunststoffolie wird sodann mit einem handelsüblichen weißpigmentierten nichtwäßrigen Decklack überlackiert (Trockenfilmdicke: 45-50 µm). Die applizierte Lackschicht wird dann bei 130°C 30 Minuten lang eingebrannt.

### Prüfung der beschichteten Substrate

Die gemäß Beispiel 1 und Beispiel 2 hergestellten beschichteten Substrate zeigten sowohl im VDA Steinschlagtest (2x500g bei 2bar) als auch im Mercedes Benz-Kugelschußtest ausgezeichnete Resistenzwerte (VDA: Note 1; Kugelschußtest: Rostgrad=0, Abplatzgrad: ≤ 2 mm²). Zur Prüfung der Korrosionsbeständigkeit wurden die beschichteten Substrate einer Salzsprühnebelprüfung nach DIN 50 021 unterworfen. Nach 6 Wochen war keine Unterrostung feststellbar.

## Patentansprüche

1. Verfahren zur Herstellung eines mit mehreren Schichten beschichteten Substrats, wobei in subsequenter Folge
A auf die Oberfläche eines Substrats eine Kunststoffolie mit einer Dicke von 2 bis 500 µm laminiert wird, wobei das Substrat nicht lackiert ist,
C die Oberfläche der auflaminierten Kunststoffolie mit mindestens einer pigmentierten Lackschicht überlackiert wird,
E die auf die Oberfläche der auflaminierten Kunststoffolie aufgetragene Lackschicht ausgehärtet wird.

2. Verfahren nach Anspruch 1, wobei
B zwischen den Stufen A und C die Oberfläche der auflaminierten Kunststoffolie mit einer zur Lackierung von Automobilkarosserien geeigneten Füllerzusammensetzung lackiert wird, und/oder
D die nach Durchführung der Stufe C erhaltene Lackschicht mit einem transparenten Lack überlackiert wird.

3. Verfahren nach Anspruch 2, wobei die Aushärtung der in Stufe B aufgetragenen Füllerschicht vor dem Überlackieren mit mindestens einer pigmentierten Lackschicht und die Aushärtung der in Stufe C aufgetragenen pigmentierte Lackschicht vor dem Überlackieren mit dem transparenten Lack durchgeführt wird.

4. Verfahren nach einem der Ansprüche 1 bis 3, wobei in Stufe A ein Metallblech als Substrat eingesetzt wird.

5. Verfahren nach Anspruch 4, dadurch gekennzeichnet, daß die Lackschicht bzw. Lackschichten mit Hilfe des Bandlackierverfahrens (coil-coating-Verfahrens) aufgebracht wird bzw. werden.

6. Verfahren nach einem der Ansprüche 1 bis 3, dadurch gekennzeichnet, daß in Stufe A ein Formteil aus Kunststoff als Substrat eingesetzt wird.

7. Verfahren nach einem der Ansprüche 1 bis 6, dadurch gekennzeichnet, daß in Stufe A eine thermoplastische Polyolefinfolie oder eine thermoplastische Polyurethanfolie eingesetzt wird.

8. Verwendung des Verfahrens nach einem der Ansprüche 1 bis 7 zur Herstellung von Anbauteilen für Fahrzeugkarosserien, vorzugsweise Automobilkarosserien.

## Claims

1. Process for the production of a substrate coated with two or more coats, where, in sequence,
A a plastics film having a thickness of from 2 to 500 µm is laminated onto the surface of a substrate, the substrate not being coated
C the surface of the plastics film applied by lamination is coated with at least one pigmented coat of paint,
E the coat of paint applied to the surface of the plastics film which is applied by lamination is cured.

2. Process according to Claim 1, where
B between steps A and C, the surface of the plastics film which is applied by lamination is coated with a filler composition which is suitable for the coating of automobile bodies, and/or
D the coat of paint obtained after carrying out step C is coated with a transparent coating material.

3. Process according to Claim 2, where the filler coat applied in step B is cured prior to the coating with at least one pigmented coat of paint and the pigmented coat of paint applied in step C is cured prior to the coating with the transparent coating material.

4. Process according to one of Claims 1 to 3, where, in step A, a metal panel is employed as substrate.

5. Process according to Claim 4, characterized in that the coat or coats is or are applied with the aid of the strip coating process (coil-coating process).

6. Process according to one of Claims 1 to 3, characterized in that, in step A, a moulding of plastic is employed as substrate.

7. Process according to one of Claims 1 to 6, characterized in that, in step A, a thermoplastic polyolefin film or a thermoplastic polyurethane film is employed.

8. Use of the process according to one of Claims 1 to 7 for the production of fitments for motor-vehicle bodies, preferably automobile bodies.

## Revendications

1. Procédé de fabrication d'un substrat revêtu de plusieurs couches, lors duquel, en séquence consécutive,
A l'on procède au laminage d'une feuille de matière plastique d'une épaisseur de 2 à 500 µm sur la surface d'un substrat, le substrat n'étant pas verni,
C l'on procède au revernissage de la surface de la feuille de matière plastique laminée à l'aide d'au moins une couche de vernis pigmentée,
E l'on procède au durcissement de la couche de vernis appliquée sur la surface de la feuille de matière plastique laminée.

2. Procédé selon la revendication 1, lors duquel
B la surface de la feuille de matière plastique laminée est soumise à un vernissage entre les étapes A et C à l'aide d'une composition de pigment de charge appropriée au vernissage des carrosseries d'automobiles, et/ou
D la couche de vernis obtenue après exécution de l'étape C est soumise à un revernissage à l'aide d'un vernis transparent.

3. Procédé selon la revendication 2, lors duquel le durcissement de la couche de pigment de charge appliquée au cours de l'étape B est effectué avant le revernissage à l'aide d'au moins une couche de vernis pigmentée, et le durcissement de la couche de vernis pigmentée appliquée au cours de l'étape C est effectué avant le revernissage à l'aide du vernis transparent.

4. Procédé selon l'une quelconque des revendications 1 à 3, lors duquel une tôle métallique est utilisée en tant que substrat au cours de l'étape A.

5. Procédé selon la revendication 4, caractérisé en ce que la ou les couches de vernis est ou sont appliquée(s) par l'intermédiaire du procédé de vernissage à bande (procédé de coil-coating).

6. Procédé selon l'une quelconque des revendications 1 à 3, caractérisé en ce que l'on utilise, en tant que substrat, au cours de l'étape A une pièce de forme en matière plastique.

7. Procédé selon l'une quelconque des revendications 1 à 6, caractérisé en ce que l'on utilise au cours de l'étape A une feuille de polyoléfine thermoplastique ou une feuille de polyuréthanne thermoplastique.

8. Utilisation du procédé selon l'une quelconque des revendications 1 à 7, en vue de la fabrication de pièces auxiliaires pour carrosseries de véhicules, de préférence pour carrosseries d'automobiles.
